# EUROPÄISCHE PATENTSCHRIFT

(11) **EP 2 573 883 B1**
(45) Veröffentlichungstag und Bekanntmachung des Hinweises auf die Patenterteilung: **19.10.2016**
(21) Anmeldenummer: 12184863.4
(22) Anmeldetag: 18.09.2012
(51) Int. Cl.: H01R 25/14, H02G 5/04

(54) **Abschlusskappe für Stromführungsprofile eines Stromverteileranordnung**
End cap for current-carrying profiles of a power distributor assembly.
Capot de recouvrement pour profilé de conduction de courant d'un agencement de boîtier d'alimentation.

(30) Priorität: 22.09.2011 DE 102011053859
(43) Veröffentlichungstag der Anmeldung: 27.03.2013
(73) Patentinhaber: Wago Verwaltungsgesellschaft mbH, 32423 Minden (DE)
(72) Erfinder: Gassauer, Stephan, 99768 Ilfeld (DE); Ziesemann, Henry, 99706 Sondershausen (DE)
(74) Vertreter: Gerstein, Hans Joachim

(56) Entgegenhaltungen:
- EP-A1- 2 264 363
- WO-A1-95/12226
- US-A- 3 622 938
- US-A- 3 688 240

## Beschreibung

Die Erfindung betrifft eine Stromverteileranordnung mit
- mindestens einer sich in eine jeweilige Längsrichtung erstreckenden Tragschiene, die einen Bodenabschnitt und zwei voneinander beabstandete Seitenabschnitte hat, die sich an den einander gegenüberliegenden Randbereichen vom Bodenabschnitt weg erstrecken,
- mit mindestens einem in einer jeweils zugeordneten Tragschiene aufnehmbaren und sich in eine jeweilige Längsrichtung erstreckenden Stromführungsprofil, das eine Basisplatte und sich quer von der Basisplatte weg und in Längsrichtung erstreckende Kontaktstege hat, die parallel zueinander mit einem jeweils zwischenliegenden Spalt voneinander beabstandet angeordnet sind und sich in Längsrichtung erstreckende elektrische Leiter haben, und
- mit einer Abschlusskappe aus Isolierstoff, die von einer Stirnfläche herausgestellte Anlagebereiche zur Anlage an mindestens einen der Kontaktstege und/oder an der Basisplatte des Stromführungsprofils hat, wenn die Abschlusskappe mit der Stirnfläche auf die Stirnseite des Stromführungsprofils aufgesetzt ist.

Die Erfindung betrifft weiterhin eine Abschlusskappe für Stromführungsprofile, die eine sich in eine Längsrichtung erstreckende Basisplatte und zwei oder mehr von der Basisplatte abragende Kontaktstege haben, die sich in Längsrichtung erstrecken und mit jeweils einem Spalt voneinander beabstandet und parallel zueinander ausgerichtet sind, wobei die Kontaktstege sich in Längsrichtung erstreckende Leiter haben, und wobei die Abschlusskappe aus Isolierstoff gebildet ist und von einer Stirnfläche herausgestellte Anlagebereiche zur Anlage an mindestens einen der Kontaktstege und/oder an der Basisplatte eines Stromführungsprofils hat, wenn die Abschlusskappe mit der Stirnfläche auf die Stirnseite des Stromführungsprofils aufgesetzt ist.

Solche Stromverteileranordnung, auch Stromschienensysteme genannt, werden insbesondere für Beleuchtungsanlagen in Gebäuden eingesetzt, um Leitungen zur Versorgung von Geräten, wie insbesondere von Leuchten oder sonstigen mit Energie und/oder Daten zu versorgenden Geräten kostengünstig und optisch ansprechend zu verlegen. Der Einbauort der Geräte kann dann flexibel entlang der Tragschiene gewählt und leicht variiert werden. Die Geräte können damit auf einfache Weise mit einem Steckverbinder elektrisch leitend mit den Leitungen an einem variabel festlegbaren Einbauort kontaktiert werden. Solche Stromverteileranordnungen haben auch den Vorteil, dass die Geräte zugleich mechanisch an der Tragschiene bzw. an dem Stromführungsprofil der Stromverteileranordnung getragen werden.

US 6,296,498 B1 beschreibt eine Stromverteileranordnung mit in einem Tragschienenprofil einander gegenüberliegend aufgenommenen Stromführungsprofilen, die sich in Längsrichtung des Tragschienenprofils erstrecken und sich in Längsrichtung der Stromführungsprofile erstreckende elektrische Leiter haben. Zur Verbindung aneinander angrenzender Tragschienenprofile sind Verbindungsstecker mit vorspringenden Kontaktzungen zur Kontaktierung der zugeordneten elektrischen Leiter vorgesehen.

DE 198 59 603 A1 offenbart ein Stromschienensystem zur Versorgung elektrischer Energie mit einem Trägerteil zur Halterung von Stromschienen und Abgangsstellen. Die mit einer durchgehenden Isolierung versehenen Stromschienen sind in ein Aluminiumprofil eingepresst, das rinnenartige Einsenkungen aufweist und als Trägerteil vorgesehen ist. Es sind Endkappen aus Isolierstoff vorgesehen, die als Isolier- und Fixierkappen wirken.

EP 2 264 363 A1 beschreibt eine Stromverteileranordnung mit einem kammartigen Stromführungsprofil, das mehrere durch einen Spalt voneinander beabstandete Kontaktstege mit elektrischen Leitern hat, die integral mit einer Basisplatte geformt sind. Das Stromführungsprofil ist an den als axiale Enden bezeichneten Stirnseiten mit einer separaten Endkappe versehen, die wenigstens einen elektrischen Leiter axial abdeckt. Allerdings deckt die Endkappe den elektrischen Schutzleiter (PE-Leiter), der an einem der außen liegenden Stegabschnitte an der Außenseite freistehend angeordnet ist, axial nicht ab. Hierdurch wird die Schutzleiterfunktion auch bei montierter Endkappe gewährleistet.

DE 20 2008 002 497 U1 beschreibt eine Aufhängevorrichtung mit einer horizontal anzuordnenden Trägerschiene mit einem Basisprofil und einem darin eingesetzten Stromprofil mit Stromleitern. Das freie Ende des Basisprofils ist über eine aufrastbare Endkappe verschließbar.

DE 27 14 467 beschreibt ein Winkelstück für eine Kontaktschiene, bei dem die Asymmetrie der von Gegenstücken von der einen Seite des Winkelstückes zur anderen Seite einfach verschoben werden kann. Das für das Verbinden von Kontaktschienen vorgesehene Winkelstück hat Kontaktfinger, die aus elastischen Metallstreifen bestehen und sich von einem Endteil zum anderen eines Winkelstücks erstrecken.

DE 71 18 268 U offenbart ein Verbindungsstück für metallische Stromschienen. Das Verbindungsstück hat metallische Verbindungsleiter, die mit entsprechenden Leitern der Stromschiene in Verbindung treten sollen.

US 3,688,240 A offenbart Endstücke für ein Spannungsverteilungssystem, das Stromschienenelemente hat. Die Endstücke haben einen vorstehenden Abschnitt, der zum Einschieben in ein Stromschienenstück vorgesehen ist. Es sind mehrere voneinander unabhängige Kontaktelemente vorgesehen, die jeweils zur Kontaktierung eines elektrischen Leiters in der Stromschiene dienen. Weiterhin ist ein Erdungskontakt vorgesehen, der sich außerhalb des vorgesehenen Abschnitts mit den Leiteranschlusskontakten erstreckt und zur Kontaktierung einer Seitenwand der Stromschiene ausgerichtet ist. Die Leiter der Stromschiene sind in einer gemeinsamen Isolierstoffhalterung aufgenommen.

Ausgehend hiervon ist es Aufgabe der vorliegenden Erfindung, eine verbesserte Stromverteilanordnung und eine Abschlusskappe für Stromführungsprofile zu schaffen, mit der die Schutzleiterkontaktierung des Stromführungsprofils vereinfacht und verbessert wird.

Die Aufgabe wird mit der Abschlusskappe mit den Merkmalen des Anspruchs 1 und der Stromverteileranordnung mit den Merkmalen des Anspruchs 8 gelöst.

Die Abschlusskappe hat hierbei mindestens ein Kontaktelement, das sowohl einem von der Stirnfläche herausragenden Leiterkontaktabschnitt zur Kontaktierung mindestens eines elektrischen Leiters eines Kontaktsteges des Stromführungsprofils, als auch mindestens einen an einer zugeordneten Seitenfläche herausragenden Seitenkontaktabschnitt aufweist. Mit Hilfe dieses an einer zugeordneten Seitenfläche herausragenden Seitenkontaktabschnitts, der Teil des Kontaktelementes ist und damit über den Leiterkontaktabschnitt mit einem elektrischen Leiter eines Kontaktsteges kontaktiert werden kann, ist eine einfache und zuverlässige Schutzleiter-Kontaktierung (PE-Kontaktierung) des Stromführungsprofils durch Aufstecken der Abschlusskappe auf das Stromführungsprofil möglich. Hierzu tritt der mindestens eine Seitenkontaktabschnitt einfach in elektrisch leitenden Kontakt mit dem Tragschienenprofil, um einen Schutzleiterkontakt herzustellen. Denkbar ist aber auch, dass der Seitenkontaktabschnitt mit einem anderweitigen Gegenkontakt angrenzend an das Stromführungsprofil in elektrisch leitenden Kontakt tritt.

Durch die an einer zugeordneten Seitenfläche der Abschlusskappe herausragenden Seitenkontaktabschnitte wird jedenfalls auf einfache und zuverlässige Weise die Herstellung eines elektrischen Kontakts zwischen dem mit dem zugeordneten Leiterkontaktabschnitt kontaktierten elektrischen Leiter eines Kontaktsteges und einem Gegenkontakt für den Seitenkontaktabschnitt, wie insbesondere die Tragschiene, hergestellt.

Unter Seitenfläche im Sinne der vorliegenden Erfindung wird jede Randfläche am Umfang der Abschlusskappe verstanden, insbesondere die seitlichen Seitenflächen und oberen und unteren Seitenflächen, die senkrecht zu der Stirnfläche stehen.

Besonders vorteilhaft ist es, wenn der mindestens eine Seitenkontaktabschnitt ein federndes Element zum Aufbringen eines Kontaktdrucks mittels Federkraft hat. Beim Aufsetzen der Abschlusskappe auf die Stirnseite eines Stromführungsprofils wird dann ein elektrisch leitender Federkontakt hergestellt, ohne dass zusätzliche Maßnahmen zur Kontaktierung des Seitenkontaktabschnitts mit einem Gegenkontakt erforderlich sind.

Denkbar ist hierbei, dass der mindestens eine Seitenkontaktabschnitt aus einer Krümmung eines Metallblechs gebildet ist. Der Seitenkontaktabschnitt ist dann in der Art eines Druckbügelkontaktes ausgebildet, bei der die Federkraft durch einen einseitig wirkenden Bügel aufgebracht wird. In Unterschied hierzu ist auch eine Variante denkbar, bei der der Kontaktdruck durch einen Gabelkontakt aufgebracht wird, der zwei federnde Gabelzinken hat, in die der Gegenkontakt, wie beispielsweise die Wand einer Tragschiene, eingeschoben wird und dabei die Gabelzinken auseinander schiebt.

Der Leiterkontaktabschnitt ist in einer bevorzugten Ausführungsform als federnde Klammer zum Umgreifen eines Kontaktsteges mit einem Anlageschenkel zur Anlage an einer ersten Fläche eines Kontaktsteges und mit einem sich im Abstand zum Anlageschenkel parallel hierzu erstreckenden Kontaktschenkel zur Anlage an einer zweiten Fläche des Kontaktsteges, die der ersten Fläche gegenüberliegt, ausgebildet. Der Anlageschenkel und der Kontaktschenkel sind miteinander verbunden. Der Leiterkontaktabschnitt ist mittels eines Federbogens am Kontaktschenkel oder in der Verbindung zwischen Kontaktschenkel und Anlageschenkel zum Aufbringen eines Kontaktdrucks auf einen elektrischen Leiter eines umgriffenden Kontaktsteges durch Federkraft ausgebildet.

Der Leiterkontaktabschnitt ist bei dieser Ausführungsform in der Art eines Gabelkontaktes ausgebildet, die als federnde Klammer wirkt und den Kontaktsteg umgreift. Hierdurch wird ein langzeitstabiler und beim Aufschieben der Abschlusskappe auf die Stirnseite des Stromführungsprofils zuverlässig und selbsttätig kontaktierender Leiterkontaktabschnitt geschaffen.

Das Kontaktelement kann zwei an einander gegenüberliegenden Seitenflächen der Abschlusskappe herausragende Seitenkontaktabschnitte haben. Dies hat den Vorteil, dass beidseits an den beiden gegenüberliegenden Seitenflächen beim Aufschieben der Abschlusskappe auf das Stromführungsprofil ein elektrisch leitender Kontakt z.B. mit der Tragschiene geschaffen wird. Dabei wirken insbesondere für den Fall von federnden Seitenkontaktabschnitt die Federkräfte entgegengesetzt zueinander und sorgen damit für einen zuverlässigen und langzeitstabilen elektrischen Kontakt.

In einer anderen Ausführungsform hat das Kontaktelement einen an einer Seitenfläche der Abschlusskappe herausragenden Seitenkontaktabschnitt, der aus einem Metallblechabschnitt gebildet ist. An dem Metallblechabschnitt erstreckt sich parallel zu dem Seitenkontaktabschnitt ein Haltesteg, der an einem Wandabschnitt der Abschlusskappe aufliegt. Der Seitenkontaktabschnitt stützt sich auf diese Weise an den Wandabschnitt der Abschlusskappe an, um ein Gegenlager zu bilden und einen zuverlässigen Kontaktdruck durch den Seitenkontaktabschnitt zu gewährleisten.

Der Leiterkontaktabschnitt und der mindestens eine Seitenkontaktabschnitt eines Kontaktelementes sind vorzugsweise integral aus einem Metallblechelement geformt. Dies kann beispielsweise durch Stanz- und/oder Biegeverfahren erfolgen. Das Metallblechelement hat vorzugsweise Federeigenschaften, um durch Federkraft einen Kontaktdruck herzustellen.

Die Erfindung wird nachfolgend anhand eines Ausführungsbeispiels mit den beigefügten Zeichnungen näher erläutert. Es zeigen:
- Figur 1: - perspektivische Ansicht einer Stromverteileranordnung mit einer Tragschiene, einem in der Tragschiene aufgenommenen Stromführungsprofil und einer Abschlusskappe;
- Figur 2: - perspektivische Ansicht einer Abschlusskappe mit Blick auf eine Stirnfläche;
- Figur 3: - perspektivische Rückseitenansicht der Abschlusskappe aus Figur 2;
- Figur 4: - perspektivische Ansicht einer ersten Ausführungsform eines Kontaktelements mit zwei einander gegenüberliegenden Seitenkontaktabschnitten;
- Figur 5: - perspektivische Rückseitenansicht einer zweiten Ausführungsform einer Abschlusskappe;
- Figur 6: - perspektivische Ansicht einer zweiten Ausführungsform eines Kontaktelementes für die Abschlusskappe aus Figur 5;
- Figur 7: - Querschnittsansicht der Abschlusskappe aus Figur 2 mit daran angesetztem Kontaktelement.

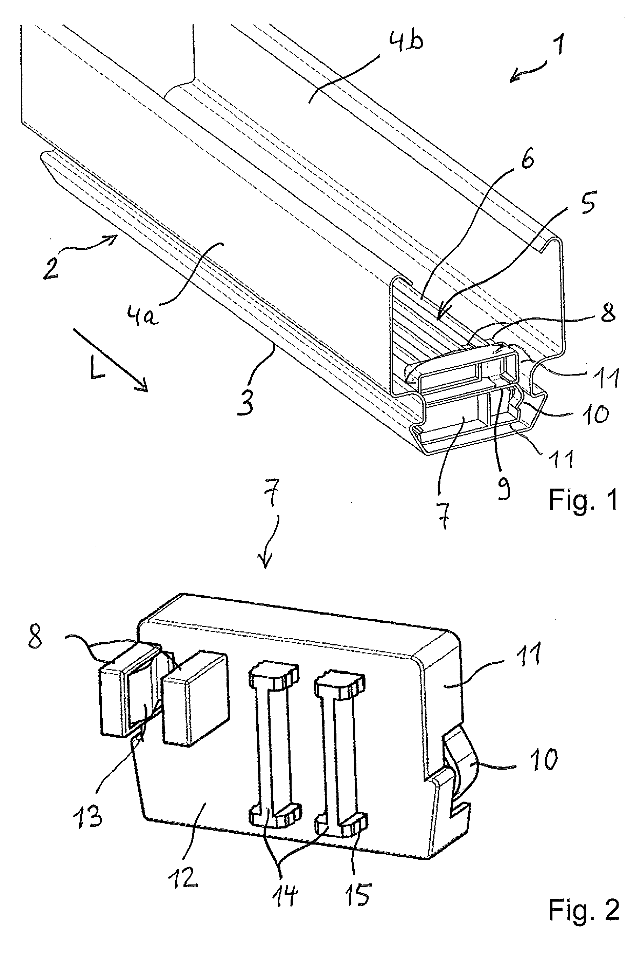

Figur 1 lässt eine perspektivische Ansicht einer Stromverteileranordnung 1 erkennen, die eine Tragschiene 2 hat, die sich in eine Längsrichtung L erstreckt. Die Tragschiene 2 ist aus einem Metallblech gebildet und hat einen Bodenabschnitt 3 und zwei voneinander beabstandete Seitenabschnitte 4a, 4b. Die Seitenabschnitte 4a, 4b erstrecken sich an einander gegenüberliegenden Randbereichen des Bodenabschnitts 3 von diesem Bodenabschnitt 3 weg. Mit Hilfe des Bodenabschnitts 3 und den Seitenabschnitten 4a, 4b wird eine oben offene Tragschiene 2 geschaffen, in die mindestens ein Stromführungsprofil 5 fest oder lösbar eingebaut ist.

Das Stromführungsprofil 5 hat in an sich bekannter Weise eine Basisplatte und sich von der Basisplatte nach oben, d.h. quer von der Basisplatte weg erstreckende Kontaktstege 6. Die Kontaktstege 6 sind parallel zueinander mit einem jeweils zwischenliegenden Spalt voneinander beabstandet angeordnet. Die Kontaktstege 6 haben in an sich bekannter Weise daran integrierte elektrische Leiter, die sich ebenfalls in Längsrichtung L erstrecken und über den jeweiligen Spalt zugänglich sind.

Die Stromverteileranordnung 1 hat weiterhin eine Abschlusskappe 7, die auf eine Stirnseite des Stromführungsprofils 5 aufgesteckt ist. Die Abschlusskappe 7 ist aus Isolierstoff, vorzugsweise aus Kunststoff, gebildet. Sie hat von einer Stirnfläche herausgestellte Anlagebereiche 8, die zur Anlage an Kontaktstege 6 des Stromführungsprofils 5 dienen, um die Abschlusskappe 7 an dem Stromführungsprofil 5 lösbar festzulegen.

Erkennbar ist, dass die Abschlusskappe 7 weiterhin ein Kontaktelement 9 hat. Das Kontaktelement 9 hat mindestens einen an einer zugeordneten Seitenfläche 11 herausragenden Seitenkontaktabschnitt 10, mit dem die Abschlusskappe 7 wie skizziert elektrisch mit der Tragschiene 2 kontaktiert wird. Auf diese Weise kann ein PE-Kontakt (Schutzleiterkontakt) zwischen Tragschiene 2 und Stromführungsprofil 5 hergestellt werden, wenn die Abschlusskappe 7 stirnseitig auf das Stromführungsprofil 5 aufgesteckt ist.

Figur 2 lässt eine perspektivische Ansicht der Abschlusskappe 7 aus Figur 1 erkennen. Deutlich wird, dass zumindest an der einen Seite der Seitenfläche 11 der Seitenkontaktabschnitt 10 in der Art eines federnden Druckbügelkontaktes aus der Seitenfläche 11 der Abschlusskappe 7 herausragt.

Erkennbar sind weiterhin zwei voneinander beabstandete Anlagebereiche 8, die von der Stirnfläche 12 der Abschlusskappe 7 hervorstehen. In diese Anlagebereiche 8 ist ein Leiterkontaktabschnitt 13 des Kontaktelementes 9 eingebaut, der einen elektrischen Leiter eines zugeordneten Kontaktsteges 6 elektrisch kontaktiert, wenn die Abschlusskappe 7 stirnseitig auf das Stromführungsprofil 5 aufgesteckt ist.

Weiterhin sind in dem dargestellten Beispiel zwei vorgestellte Stege 14 mit seitlich vorspringenden Rastnasen 15 vorgesehen, die zum Eintauchen in die jeweils zugeordnete Spalte zwischen zwei Kontaktstegen 6 eines Stromführungsprofils 5 vorgesehen sind. Mit Hilfe der Rastnasen 15 kann die Abschlusskappe 7 dann mit dem Stromführungsprofil 5 verklemmt werden.

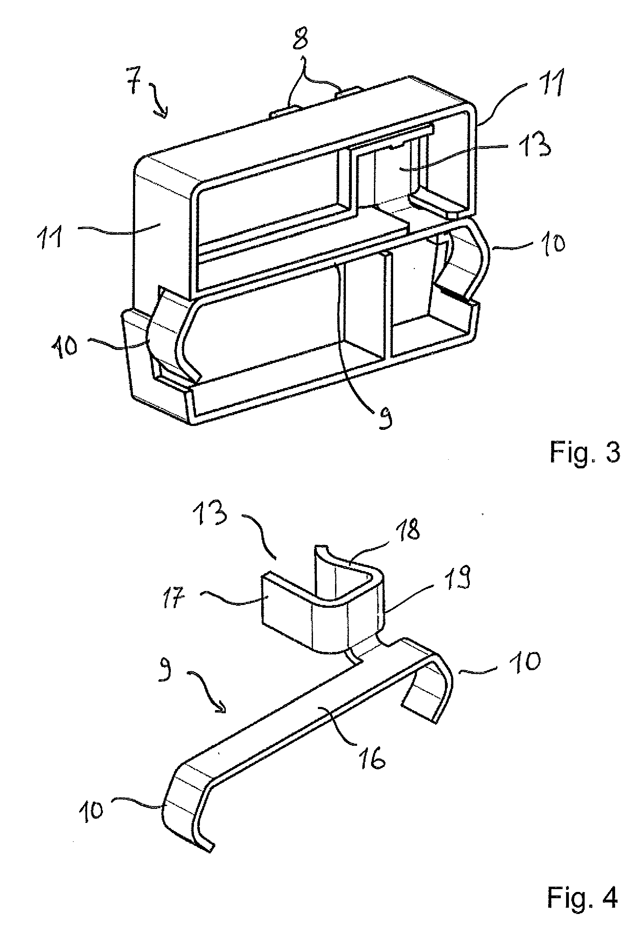

Figur 3 lässt eine Rückseitenansicht der Abschlusskappe 7 aus Figur 2 erkennen. Deutlich wird, dass in den Innenraum der aus elektrisch isolierenden Kunststoff gebildeten Abschlusskappe 7 ein Kontaktelement 9 eingebaut ist, das zwei aus einander gegenüberliegenden Seitenflächen 11 der Abschlusskappe herausragende Seitenkontaktabschnitte 10 hat. Auf diese Weise wird die Abschlusskappe 7 beidseits elektrisch mit einer Tragschiene 2 kontaktiert, wobei die Abschlusskappe 7 durch die symmetrische Anordnung der Seitenkontaktabschnitte 10 selbsttragend in der Tragschiene 2 festgeklemmt wird.

Figur 4 lässt eine perspektivische Ansicht einer ersten Ausführungsform eines Kontaktelementes 9 entsprechend der Version aus Figur 3 erkennen. Deutlich wird, dass das Kontaktelement 9 einstückig aus einem Metallblech durch Umformen gebildet ist. Als Umformverfahren bieten sich Stanz- und/oder Biegeprozesse an.

Erkennbar ist, dass die Seitenkontaktabschnitte 10 durch Krümmung eines Metallblechs gebildet sind. Dadurch wird ein Druckbügelkontakt mit Federeigenschaft geschaffen. Beim Einbau der Abschlusskappe 7 mit einem solchen Kontaktelement 9 werden die Seitenkontaktabschnitte 10 durch die sich daran anschließende Tragschiene 2 aufeinander zu bewegt, so dass die Seitenkontaktabschnitte 10 eine Federkraft nach außen in Richtung angrenzender Tragschiene 2 ausüben und damit einen Kontaktdruck zur elektrischen Kontaktierung von Tragschiene 2 und Kontaktelement 9 aufbringen.

Quer von dem Verbindungsstück 16 der beiden einander gegenüberliegenden Seitenkontaktabschnitte 10 geht der Leiterkontaktabschnitt 13 ab. Dieser ist ebenfalls integral aus demselben Metallblech herausgeformt. Der Leiterkontaktabschnitt 13 ist in der dargestellten Ausführungsform als federnde Klammer zum Greifen eines zugeordneten Kontaktsteges 6 ausgebildet. Er hat einen Anlageschenkel 17 zur Anlage an einer ersten Fläche eines Kontaktsteges 6 sowie einen Kontaktschenkel 18. Der Kontaktschenkel 18 erstreckt sich im Abstand zum Anlageschenkel 17 parallel hierzu und dient zur Anlage an einer zweiten Fläche des Kontaktsteges 6, die der ersten Fläche des Kontaktsteges 6 gegenüberliegt. Auf diese Weise wird ein Kontaktsteg 6 in dem Zwischenraum zwischen Anlageschenkel 17 und Kontaktschenkel 18 aufgenommen. Ein elektrischer Leiter des zugeordneten Kontaktsteges 6 wird dann mit dem Kontaktschenkel 8 elektrisch kontaktiert. Hierzu liegt der Kontaktschenkel 18 federnd auf den elektrischen Leiter auf. Der Kontaktschenkel 18 ist als federndes Element ausgebildet, das quer durch einen Federbogen 19 im Übergang zu dem Verbindungsstück zwischen Kontaktschenkel 18 und Anlageschenkel 17 zusammenwirkt. Das freie Ende des Kontaktschenkels 18 ist zudem vom Anlageschenkel 17 weggebogen, um ein zuverlässiges Aufschieben auf einen Kontaktsteg 6 ohne Verhaken zu ermöglichen. Gleichermaßen könnte auch das freie Ende des Anlageschenkels 17 vom Kontaktschenkel 18 leicht weggebogen sein oder eine Einführungsschräge haben.

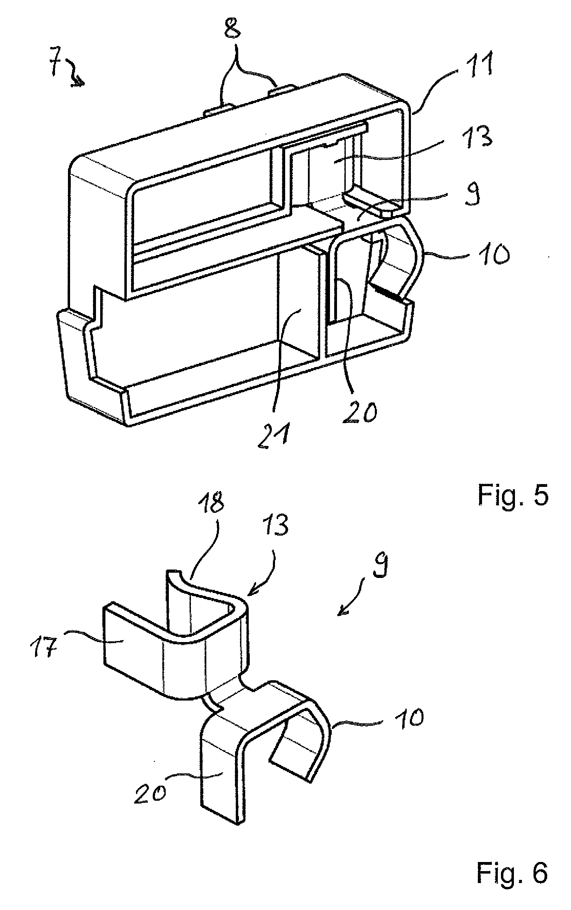

Figur 5 zeigt eine Abschlusskappe 7 in der Rückseitenansicht mit einer zweiten Ausführungsform eines Kontaktelementes 9. Dieses Kontaktelement 9 hat einen einzigen von einer Seitenfläche 11 herausragenden Seitenkontaktabschnitt 10. Dieser Seitenkontaktabschnitt 10 ist aus einem Metallblechabschnitt gebildet, an dem sich parallel zu dem Seitenkontaktabschnitt 10 ein Haltesteg 20 erstreckt. Der Haltesteg 20 liegt an einem Wandabschnitt 21 der Abschlusskappe 7 an, um das Kontaktelement 9 seitlich in der Abschlusskappe 7 zu fixieren.

Figur 6 lässt eine perspektivische Ansicht der zweiten Ausführungsform des Kontaktelementes 9 erkennen. Deutlich wird, dass der Leiterkontaktabschnitt 13 quer von dem Übergangsstück zwischen Haltesteg 20 und Seitenkontaktabschnitt 10 herausgebogen ist. Hierdurch ist die Einführungsöffnung für einen Kontaktsteg 6 des als federnde Klammer ausgebildeten Leiterkontaktabschnittes 13 quer zur Federrichtung des Seitenkontaktabschnittes 10 ausgerichtet.

Der Leiterkontaktabschnitt 13 hat wiederum einen Anlageschenkel 17 und einen parallel hierzu im Abstand erstreckenden Kontaktschenkel 18.

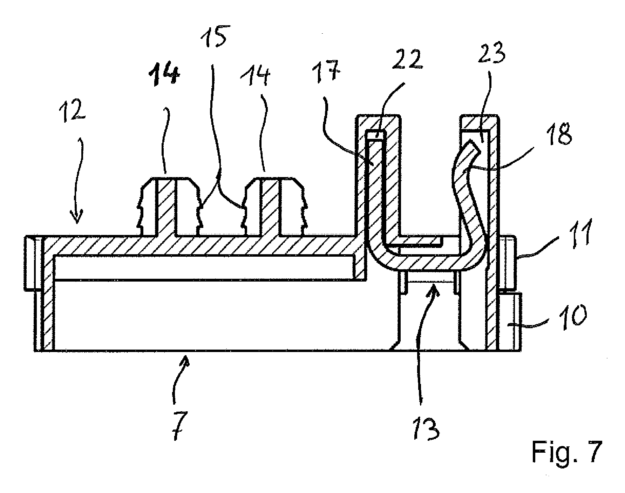

Figur 7 lässt eine Querschnittsansicht der Abschlusskappe 7 aus den Figuren 1 bis 3 und 5 erkennen. Deutlich wird, dass die Anlagenbereiche 8 einschließlich der in Form von Stegen 14, 15 ausgebildeten Anlagebereiche von einer Stirnfläche 12 der Abschlusskappe 7 hervorstehen. Erkennbar sind auch die von den Stegen 14 seitlich vorstehenden Rastnasen 15 in Form von Widerhaken, mit denen die Abschlusskappe 7 zwischen zwei Kontaktstegen 6 verkeilt werden kann.

Erkennbar ist weiterhin, dass der Anlageschenkel 17 des Leiterkontaktabschnittes 13 in einer aus dem Isolierstoffgehäuse der Abschlusskappe 7 gebildeten Tasche 22 aufgenommen ist. Hierdurch ist der Anlageschenkel 17 beidseits und stirnseitig von einer Isolierstoffwand umgeben. Ebenso ist an der Ober- und Unterseite eine Isolierstoffwand vorhanden.

Der Kontaktschenkel 18 ist hingegen in einer einseitig offenen Tasche 23 aufgenommen, die ebenfalls aus dem Isolierstoffmaterial des Gehäuses der Abschlusskappe 7 gebildet ist. Diese Tasche 23 ist in Richtung des Anlageschenkels 17 geöffnet, so dass der Kontaktschenkel 18 aufgrund seiner Wölbung aus der Tasche 23 herausragt. Auf diese Weise kann eine elektrische Kontaktierung mit einem elektrischen Leiter eines Kontaktsteges 6 erfolgen, der in den Zwischenraum zwischen Anlageschenkel 17 und Kontaktschenkel 18 eingeführt wird.

Deutlich wird auch, dass der Seitenkontaktabschnitt 10 seitlich über die Seitenwand 11 des Isolierstoffgehäuses der Abschlusskante 7 herausragt. Er kann dann beim Einstecken in eine Tragschiene beim Aufstecken auf ein Stromführungsprofil in Richtung Seitenfläche der Abschlusskappe 7 zurückgedrückt werden, um einen Kontaktdruck durch Federkraft auf die Tragschiene 2 auszuüben und damit in elektrischen Kontakt mit der Tragschiene 2 zu treten.

Der Seitenkontaktabschnitt 10 kann optional scharfkantige Bereich haben, mit denen eine Beschichtung der Tragschiene 2, z.B. Lack oder Korrosion, durchdrungen werden kann, um einen zuverlässigen elektrischen Kontakt herzustellen.

## Patentansprüche

1. Abschlusskappe (7) für Stromführungsprofile (5), die eine sich in eine Längsrichtung (L) erstreckende Basisplatte und zwei oder mehr von der Basisplatte abragende Kontaktstege (6) haben, die sich in Längsrichtung (L) erstrecken und mit jeweils einem Spalt voneinander beabstandet und parallel zueinander ausgerichtet sind, wobei die Kontaktstege (6) sich in Längsrichtung (L) erstreckende Leiter haben, und wobei die Abschlusskappe (7) aus Isolierstoff gebildet ist und von einer Stirnfläche (12) herausgestellte Anlagebereiche zur Anlage an mindestens einen der Kontaktstege und/oder an der Basisplatte eines Stromführungsprofils (5) hat, wenn die Abschlusskappe (7) mit der Stirnfläche (12) auf eine Stirnseite des Stromführungsprofils (5) aufgesetzt ist,
**dadurch gekennzeichnet, dass**
die Abschlusskappe (7) mindestens ein Kontaktelement (9) hat, das einen von der Stirnfläche (12) herausragenden Leiterkontaktabschnitt (13) zur Kontaktierung mindestens eines elektrischen Leiters eines der Kontaktstege (6) des Stromführungsprofils (5) und mindestens einem an einer zugeordneten Seitenfläche (11) herausragenden Seitenkontaktabschnitt (10) aufweist.

2. Abschlusskappe (7) nach Anspruch 1, **dadurch gekennzeichnet, dass** der mindestens eine Seitenkontaktabschnitt (10) ein federndes Element zum Aufbringen eines Kontaktdrucks mittels Federkraft hat.

3. Abschlusskappe (7) nach Anspruch 2, **dadurch gekennzeichnet, dass** der mindestens eine Seitenkontaktabschnitt (10) aus einer Krümmung eines Metallblechs gebildet ist.

4. Abschlusskappe (7) nach einem der vorhergehenden Ansprüche, **dadurch gekennzeichnet, dass** der Leiterkontaktabschnitt (13) als federnde Klammer zum Umgreifen eines der Kontaktstege (6) mit einem Anlageschenkel (17) zur Anlage an einer ersten Fläche eines der Kontaktstege (6) und mit einem sich im Abstand zum Anlageschenkel (17) parallel hierzu erstreckenden Kontaktschenkel (18) zur Anlage an einer zweiten Fläche des Kontaktsteges (6), die der ersten Fläche gegenüberliegt, ausgebildet ist, wobei der Anlageschenkel (17) und der Kontaktschenkel (18) miteinander verbunden sind und wobei der Leiterkontaktabschnitt (13) mittels eines Federbogens (19) am Kontaktschenkel (18) oder in der Verbindung zwischen Kontaktschenkel (18) und Anlageschenkel (17) zum Aufbringen eines Kontaktdrucks auf einen elektrischen Leiter eines umgriffenen Kontaktsteges (6) mittels Federkraft ausgebildet ist.

5. Abschlusskappe (7) nach einem der vorhergehenden Ansprüche, **dadurch gekennzeichnet, dass** mindestens eines der Kontaktelement (9) zwei aus einander gegenüberliegenden Seitenflächen (11) der Abschlusskappe (7) herausragende Seitenkontaktabschnitte (10) hat.

6. Abschlusskappe (7) nach einem der Ansprüche 1 bis 4, **dadurch gekennzeichnet, dass** mindestens eines der Kontaktelement (9) einen an einer Seitenfläche (11) der Abschlusskappe (7) herausragenden Seitenkontaktabschnitt (10) hat, wobei der Seitenkontaktabschnitt (10) aus einem Metallblechabschnitt gebildet ist, an dem sich parallel zu dem Seitenkontaktabschnitt (10) ein Haltesteg (20) erstreckt, der an einem Wandabschnitt (21) der Abschlusskappe (7) anliegt.

7. Abschlusskappe (7) nach einem der vorhergehenden Ansprüche, **dadurch gekennzeichnet, dass** der Leiterkontaktabschnitt (13) und der mindestens eine Seitenkontaktabschnitt (10) des mindestens eines Kontaktelementes (9) integral aus einem Metallblech geformt sind.

8. Stromverteileranordnung (1) mit
- mindestens einer sich in eine jeweilige Längsrichtung (L) erstreckenden Tragschiene (2), die einen Bodenabschnitt und zwei voneinander beabstandete Seitenabschnitte (4a, 4b) hat, die sich an den einander gegenüberliegenden Randbereichen vom Bodenabschnitt (3) weg erstrecken,
- mit mindestens einem in einer jeweils zugeordneten Tragschiene (2) aufnehmbaren und sich in eine jeweilige Längsrichtung (L) erstreckenden Stromführungsprofil (5), das eine Basisplatte und sich quer von der Basisplatte weg und in Längsrichtung (L) erstreckende Kontaktstege (6) hat, die parallel zueinander mit einem jeweils zwischenliegenden Spalt voneinander beabstandet angeordnet sind und sich in Längsrichtung (L) erstreckende elektrische Leiter haben, und
- mit einer Abschlusskappe (7) aus Isolierstoff, die von einer Stirnfläche (12) herausgestellte Anlagebereiche zur Anlage an mindestens einen der Kontaktstege und/oder an der Basisplatte des Stromführungsprofils (5) hat, wenn die Abschlusskappe mit der Stirnfläche (12) auf eine Stirnseite des Stromführungsprofils aufgesetzt ist,
**dadurch gekennzeichnet, dass**
- die Abschlusskappe (7) mindestens ein Kontaktelement (9) hat, das einen von der Stirnfläche (12) herausragenden Leiterkontaktabschnitts (13) zur Kontaktierung mindestens eines elektrischen Leiters eines der Kontaktstege (6) des Stromführungsprofils (5) und mindestens einen an einer zugeordneten Seitenfläche (11) herausragenden Seitenkontaktabschnitt (10) zur elektrischen Kontaktierung der Tragschiene (2) aufweist.

## Claims

1. End cap (7) for current-carrying profiles (5) which have a base plate which extends in a longitudinal direction (L) and two or more contact webs (6) which protrude from the base plate and which extend in the longitudinal direction (L) and are spaced apart from one another by in each case one gap and are oriented parallel in relation to one another, wherein the contact webs (6) have conductors which extend in the longitudinal direction (L), and wherein the end cap (7) is formed from insulating material and has bearing regions, which project from an end face (12), for bearing against at least one of the contact webs and/or against the base plate of a current-carrying profile (5) when the end cap (7) is fitted, by way of the end face (12), on an end side of the current-carrying profile (5),
**characterized in that**
the end cap (7) has at least one contact element (9) which has a conductor contact section (13), which protrudes from the end face (12), for making contact with at least one electrical conductor of one of the contact webs (6) of the current-carrying profile (5) and at least one side contact section (10) which project from an associated side face (11).

2. End cap (7) according to Claim 1, **characterized in that** the at least one side contact section (10) has a spring-action element for applying a contact pressure by means of spring force.

3. End cap (7) according to Claim 2, **characterized in that** the at least one side contact section (10) is formed from a curved portion of a metal sheet.

4. End cap (7) according to one of the preceding claims, **characterized in that** the conductor contact section (13) is in the form of a spring-action clip for engaging around one of the contact webs (6) with a bearing limb (17) for bearing against a first face of one of the contact webs (6) and with a contact limb (18), which extends parallel to and at a distance from the bearing limb (17), for bearing against a second face of the contact web (6) which is opposite the first face, wherein the bearing limb (17) and the contact limb (18) are connected to one another, and wherein the conductor contact section (13) is designed to apply a contact pressure to an electrical conductor of a surrounded contact web (6) by means of spring force by means of a spring bow (19) on the contact limb (18) or in the connection between the contact limb (18) and the bearing limb (17).

5. End cap (7) according to one of the preceding claims, **characterized in that** at least one of the contact elements (9) has two side contact sections (10) which protrude from side faces (11), which are opposite one another, of the end cap (7).

6. End cap (7) according to one of Claims 1 to 4, **characterized in that** at least one of the contact elements (9) has a side contact section (10) which protrudes from a side face (11) of the end cap (7), wherein the side contact section (10) is formed from a metal sheet section from which a retaining web (20) which bears against a wall section (21) of the end cap (7) extends parallel in relation to the side contact section (10).

7. End cap (7) according to one of the preceding claims, **characterized in that** the conductor contact section (13) and the at least one side contact section (10) of the at least one contact element (9) are integrally formed from one metal sheet.

8. Power distributor arrangement (1)
- having at least one mounting rail (2) which extends in a respective longitudinal direction (L) and has a bottom section and two side sections (4a, 4b) which are at a distance from one another and extend away from the bottom section (3) at the edge regions which are opposite one another,
- having at least one current-carrying profile (5) which can be accommodated in a respectively associated mounting rail (2) and extends in a respective longitudinal direction (L) and has a base plate and contact webs (6) which extend transversely away from the base plate and in the longitudinal direction (L) and are arranged parallel in relation to one another and at a distance from one another by an intermediate gap in each case and have electrical conductors which extend in the longitudinal direction (L), and
- having an end cap (7) which is composed of insulating material and has bearing regions, which project from an end face (12), for bearing against at least one of the contact webs and/or against the base plate of the current-carrying profile (5) when the end cap is fitted, by way of the end face (12), on an end side of the current-carrying profile,
**characterized in that**
- the end cap (7) has at least one contact element (9) which has a conductor contact section (13), which protrudes from the end face (12), for making contact with at least one electrical conductor of one of the contact webs (6) of the current-carrying profile (5) and with at least one side contact section (10), which protrudes from an associated side face (11), for making electrical contact with the mounting rail (2).

## Revendications

1. Capot de fermeture (7) pour profilés (5) de guidage de courant qui présentent une plaque de base s'étendant dans le sens (L) de la longueur et deux ou plusieurs nervures de contact (6) qui débordent de la plaque de base, qui s'étendent dans le sens (L) de la longueur, sont écartées l'une de l'autre par un interstice et sont alignées parallèlement l'une à l'autre,
les nervures de contact (6) présentant des conducteurs qui s'étendent dans le sens (L) de la longueur et le capot de fermeture (7) étant formé d'une matière isolante et présentant des parties de pose prolongeant une surface frontale (12) et assurant la pose sur au moins l'une des nervures de contact et/ou sur la plaque de base d'un profilé (5) de guidage de courant lorsque le capot de fermeture (7) est placé par sa surface frontale (12) sur un côté frontal du profilé (5) de guidage de courant,
**caractérisé en ce que**
le capot de fermeture (7) présente au moins un élément de contact (9) qui présente une section (13) de contact de conducteur qui déborde de la surface frontale (12) et qui assure le contact avec au moins un conducteur électrique de l'une des nervures de contact (6) du profilé (5) de guidage de courant et au moins une section (10) de contact latéral qui déborde d'une surface latérale (11) associée.

2. Capot de fermeture (7) selon la revendication 1, **caractérisé en ce que** la ou les sections (10) de contact latéral présentent un élément élastique qui applique une poussée de contact à l'aide d'une force élastique.

3. Capot de fermeture (7) selon la revendication 2, **caractérisé en ce que** la ou les sections (10) de contact latéral sont formées d'une courbure de tôle métallique.

4. Capot de fermeture (7) selon l'une des revendications précédentes, **caractérisé en ce que** la section (13) de contact de conducteur est configurée comme pince élastique qui chevauche l'une des nervures de contact (6) par une aile de pose (17) qui vient se poser sur une première surface de l'une des nervures de contact (6) et une aile de contact (18) qui s'étend à distance de l'aile de pose (17) et parallèlement à cette dernière, qui vient se placer sur une deuxième surface de la nervure de contact (6), située à l'opposé de la première surface, l'aile de pose (17) et l'aile de contact (18) étant raccordées l'une à l'autre et la section (13) de contact de conducteur étant configurée pour appliquer une poussée de contact sur un conducteur électrique d'une nervure de contact (6) chevauchée, au moyen d'une force élastique appliquée au moyen d'un arc élastique (19) prévu sur l'aile de contact (18) ou dans la liaison entre l'aile de contact (18) et l'aile de pose (17).

5. Capot de fermeture (7) selon l'une des revendications précédentes, **caractérisé en ce qu'**au moins l'un des éléments de contact (9) possède deux sections (10) de contact latéral qui débordent de surfaces latérales (11) mutuellement opposées du capot de fermeture (7).

6. Capot de fermeture (7) selon l'une des revendications 1 à 4, **caractérisé en ce qu'**au moins l'un des éléments de contact (9) possède une section (10) de contact latéral qui déborde sur une surface latérale (11) du capot de fermeture (7), la section (10) de contact latéral étant formée d'une section de tôle métallique sur laquelle une nervure de maintien (20) qui repose sur une section de paroi (21) du capot de fermeture (7) s'étend parallèlement à la section (10) de contact latéral.

7. Capot de fermeture (7) selon l'une des revendications précédentes, **caractérisé en ce que** la section (13) de contact de conducteur et la ou les sections (10) de contact latéral du ou des éléments de contact (9) sont formées d'un seul tenant à partir d'une tôle métallique.

8. Ensemble (1) de répartition de courant doté de :
au moins un rail porteur (2) s'étendant dans un sens (L) de la longueur, qui possède une section de fond et deux sections latérales (4a, 4b) disposées à distance l'une de l'autre et qui partent de bordures mutuellement opposées de la section de fond (3),
au moins un profilé (5) de guidage de courant qui peut être repris dans un rail porteur (2) associé et qui s'étend dans le sens (L) de la longueur, qui possède une plaque de base et des nervures de contact (6) qui s'éloignent transversalement de la plaque de base et dans le sens (L) de la longueur, et qui sont disposées à distance l'une de l'autre avec un interstice intermédiaire entre eux et possèdent des conducteurs électriques qui s'étendent dans le sens (L) de la longueur et
un capot de fermeture (7) en matériau isolant qui possède des parties de pose débordant d'une surface frontale (12) et assurant la pose sur au moins l'une des nervures de contact et/ou sur la plaque de base du profilé (5) de guidage de courant lorsque le capot de fermeture est placé par sa surface frontale (12) sur un côté frontal du profilé de guidage de courant,
**caractérisé en ce que**
le capot de fermeture (7) présente au moins un élément de contact (9) qui présente une section (13) de contact de conducteur qui déborde de la surface frontale (12) et qui assure le contact avec au moins un conducteur électrique de l'une des nervures de contact (6) du profilé (5) de guidage de courant et avec au moins une section (10) de contact latéral qui déborde d'une surface latérale (11) associée pour assurer le contact électrique avec le rail porteur (2).
